# EUROPEAN PATENT SPECIFICATION

(11) **EP 1 144 473 B1**
(45) Date of publication and mention of the grant of the patent: **24.09.2003**
(21) Application number: 99971232.6
(22) Date of filing: 09.11.1999
(51) Int. Cl.: C08G 18/48, C08G 18/28, C06B 45/10

(54) **SYNTHESIS OF ENERGETIC THERMOPLASTIC ELASTOMERS CONTAINING BOTH POLYOXIRANE AND POLYOXETANE BLOCKS**
HERSTELLUNG VON ENERGETISCHEN THERMOPLASTISCHEN ELASTOMEREN DIE SOWOHL POLYOXIRAN- ALS POLYOXETANBLÖCKE ENTHALTEN
SYNTHESE D'ELASTOMERES THERMOPLASTIQUES ACTIFS CONTENANT DES BLOCS POLYOXYRANE ET DES BLOCS POLYOXETANE

(30) Priority: 12.11.1998 US 108458 P
(43) Date of publication of application: 17.10.2001
(73) Proprietor: ALLIANT TECHSYSTEMS INC., Edina, Minnesota 55436 (US)
(72) Inventor: SANDERSON, Andrew, John, North Ogden, UT 84414 (US); EDWARDS, Wayne, W., Termonton, UT 84337 (US); CANNIZZO, Louis, F., North Ogden, UT 84414 (US); WARDLE, Robert, B., Logan, UT 84321 (US)
(74) Representative: Stuttard, Garry Philip
(86) International application number: US9924015
(87) International publication number: WO00034209

(56) References cited:
- EP-A- 0 353 961
- GB-A- 2 307 688
- US-A- 4 393 199
- US-A- 4 806 613
- US-A- 5 210 153

## Description

### BACKGROUND OF THE INVENTION

### 1. Field of the Invention

This invention relates to energetic thermoplastic elastomers which are useful as binders of high energy compositions, such as propellants, especially rocket propellants and gun propellants, explosives munitions, gasifiers of vehicle supplemental restraint systems, or the like, and to methods for synthesizing the same.

### 2. Description of the Related Art

Solid high energy compositions, such as propellants, explosives, gas generants, and the like comprise solid particulates, such as fuel particulates and/or oxidizer particulates, dispersed and immobilized throughout a polymeric binder matrix.

Conventional solid composite propellant binders utilize cross-linked elastomers in which prepolymers are cross-linked by chemical curing agents. As outlined in detail in U.S. Patent No. 4,361,526, there are important disadvantages to using cross-linked elastomers as binders. Cross-linked elastomers must be cast within a short period of time after addition of the curative, which time period is known as the "pot life". Disposal of a cast, cross-linked propellant composition is difficult, and usually is accomplished by burning, which poses environmental problems. Furthermore, current state-of-the-art propellant compositions have serious problems that include their use of nonenergetic binders which have lower performance and high end-of-mix viscosities.

In view of the inherent disadvantages associated with the use of cross-linked elastomeric polymers as binder materials, there has been considerable interest in developing thermoplastic elastomers suitable as binders for solid, high energy compositions. However, many thermoplastic elastomers fail to meet important requirements expected of propellant formulations, particularly the requirement of being processible below about 120°C, it being desirable that a thermoplastic elastomeric polymer for use as a binder in a high energy system have a melting temperature of between about 60°C and about 120°C. The melting temperature is desirably at least about 60°C because the propellant composition may be subject to somewhat elevated temperatures during storage, and transport, and significant softening of the propellant composition at such elevated temperatures is unwanted. The setting of the melting temperature at not more than 120°C is determined by the instability, at elevated temperatures, of many components which ordinarily go into propellant compositions, particularly oxidizer particulates and energetic plasticizers. Many thermoplastic elastomers exhibit high melt viscosities which preclude high solids loading and many show considerable creep and/or shrinkage after processing. Crosslinkable thermoplastic elastomers typically obtain their thermoplastic properties from segments that form glassy domains which may contribute to physical properties adverse to their use as binders. Thermoplastic elastomers are block copolymers with the property of forming physical cross-links at predetermined temperatures. One thermoplastic elastomer, e.g., Kraton, brand TPE, obtains this property by having the glass transition point of one component block above room temperature. At temperatures below 109°C, the glassy blocks of Kraton form glassy domains and thus physically cross-link the amorphous segments. The strength of these elastomers depends upon the degree of phase separation. Thus, it remains desirable to have controlled, but significant, immiscibility between the two types of blocks, which is a function of their chemical structure and molecular weight. On the other hand, as the blocks become more immiscible, the melt viscosity increases, thus having a deleterious effect on the processibility of the material.

Above-mentioned U.S. Patent No. 4,361,526 proposes a thermoplastic elastomeric binder which is a block copolymer of a diene and styrene, the styrene blocks providing a meltable crystal structure and the diene blocks imparting rubbery or elastomeric properties to the copolymer. The '526 patent states that this polymer is processed in a volatile organic solvent. Solvent processing is undesirable inasmuch as the dissolved composition cannot be cast in a conventional manner, e.g., into a rocket motor casing. Furthermore, solvent-based processing presents problems with respect to removal and recovery of solvent.

The preparation of energetic thermoplastic elastomers prepared from polyoxetane block copolymers has been proposed in U.S. Patent No. 4,483,978 to Manser and U.S. Patent No. 4,806,613 to Wardle ("the '613 patent").

According to the latter, these materials overcome the disadvantages associated with conventional cross-linked elastomers such as limited pot-life, high end-of-mix viscosity, and scrap disposal problems.

The thermoplastic materials proposed by the '613 patent involve elastomers having both (A) and (B) blocks, each derived from cyclic ethers, such as oxetane and oxetane derivatives and tetrahydrofuran (THF) and tetrahydrofuran derivatives. The monomer or combination of monomers of the (A) blocks are selected for providing a crystalline structure at usual ambient temperatures, such as below about 60°C, whereas the monomer or combination of monomers of the (B) blocks are selected to ensure an amorphous structure at usual ambient temperatures, such as above about -20°C. Typical of these materials is the random block copolymer (poly(3-azidomethyl-3-methyloxetane)-poly(3,3-bis(azidomethyl)oxetane), also known as poly(AMMO/BAMO).

Although the materials described by the '613 patent can be synthesized to exhibit acceptable mechanical properties for use as binders in explosive and propellant formulations, they have somewhat low densities. For example, poly(AMMO/BAMO) has a density of around 1.2g/ml, with the precise value depending upon the proportions of A/B blocks. Additionally, the materials described by the '613 patent also have lower oxygen balance and energetic performance than other thermoset and thermoplastic energetic materials. The less than desirable oxygen balance and energy density of the thermoplastic elastomers disclosed by the '613 patent is a consequence of the use of polymer segments rich in unsymmetrical poly(3,3-disubstituted oxetane) or non-energetic polyether as the softer B block. The B block typically constitutes approximately 65-85% by weight of the thermoplastic elastomer.

It would therefore be a significant advancement in the art to provide energetic thermoplastic elastomer binders that are solid at room temperature and exhibit the excellent mechanical properties of the materials disclosed in the '613 patent, while possessing higher densities and improved oxygen balance and energetic performance.

### SUMMARY OF THE INVENTION

It is, therefore, an object of this invention to provide a thermoplastic elastomer that addresses the aforementioned problems associated with the related art and realizes the advancement expressed above.

In accordance with the principles of this invention, these and other objects are attained by the provision of an energetic thermoplastic elastomer having polyetherA blocks and polyether B blocks and being present in a solid state suitable for use as a binder for at least one of a propellant, explosive, and gasifier, the energetic thermoplastic elastomer being formed from a composition comprising, as constituents:
polyether A blocks terminated with isocyanate-reactive groups derived from monomers comprising one or more oxetane derivatives, the polyetherA blocks being crystalline at temperatures below 60°C;
polyether B blocks terminated with secondary hydroxyl groups derived from monomers comprising at least one member selected from the group consisting of oxirane and derivatives thereof, the polyether B blocks being amorphous at temperatures above -20°C; and
linked groups derived from at least one diisocyanate and at least one linking compound comprising two functional groups which are reactive with the isocyanate moieties of the diisocyanate.

Viewed from a further aspect, the present invention provides 50 wt% to 95 wt% of at least one solid selected from the group consisting of fuel particulates and oxidizer particulates; and
at least one energetic thermoplastic elastomer as defined herein above.

The polyether A blocks include one or more polyether(s) derived from monomers of oxetane derivatives and crystalline at temperatures below 60°C. The polyether B blocks include one or more polyether(s) derived from monomers of oxirane and its derivatives and amorphous at temperatures above -20°C. The polyoxetane blocks A and polyoxirane blocks B may be linked by end-capping with diisocyanates and linking the end-capped blocks with difunctional linking chemicals in which each of the two terminal functional groups are reactive with an isocyanate moiety of the diisocyanate.

It is also an object of this invention to provide a method for the preparation of the above described energetic thermoplastic binder of this invention. In accordance with the principles of this invention, this and other objects are achieved by a method of preparing an energetic thermoplastic elastomer having polyether A blocks which are crystalline at temperatures below 60°C and B blocks which are amorphous at temperatures above -20°C, the polyether A blocks being polyethers derived from monomers comprising oxetane derivatives, the polyether B blocks being polyethers derived from monomers comprising at least one member selected from the group consisting of oxiranes and derivatives thereof, the method comprising:
providing the polyether A blocks and the polyether B blocks at approximately stoichiometric ratios intended to be present in the energetic thermoplastic elastomer, the polyether A blocks being terminated with isocyanate-reactive functional groups derived from monomers comprising oxetane derivatives and crystalline at temperatures below 60°C, the polyether B blocks being terminated with secondary hydroxyl groups, derived from monomers comprising at least one member selected from the group consisting of oxiranes and derivatives thereof, and amorphous at temperatures above -20°C;
end-capping the polyether A blocks and the polyether B blocks by reacting the polyether A blocks and the polyether B blocks with at least one diisocyanate in which at least a first isocyanate moiety therof is substantially more reactive with the terminal groups of the blocks than a second isocyanate moiety thereof, whereby the more reactive first isocyanate moiety is capable of reacting with the terminal groups of the blocks, leaving the less reactive second isocyanate moiety free and unreacted; and
reacting the end-capped polyether A blocks and the end-capped polyether B blocks together with a linking compound having two isocyanate-reactive groups which are sufficiently unhindered to reactive with the free and unreacted second isocyanate moieties of the end-capped blocks.

The diisocyanate preferably has one isocyanate moiety which is more reactive, preferably at least five times as reactive, with the terminal hydroxyl group of each of the blocks than the other isocyanate moiety, whereby the more reactive isocyanate moiety tends to react with the terminal-hydroxyl groups of the blocks, leaving the less reactive isocyanate moiety free and unreactive. The end-capped A blocks and the end-capped B blocks are mixed together at approximately the stoichiometric ratios that the blocks are intended to be present in the energetic thermoplastic elastomer. The mixture is reacted with a linking compound having two isocyanate-reactive groups which are sufficiently unhindered to react with the free arid unreacted isocyanate groups of the end-capped blocks. In this manner, the end-capped blocks are linked, but not crosslinked, to form a thermoplastic elastomer.

It is still a further object of this invention to provide propellants, especially rocket propellants and gun propellants, explosives, gas generants, or the like containing the above-discussed energetic thermoplastic elastomer binder or made by procedures including the above-discussed method.

These and other objects, features and advantages of the present invention will become apparent from the accompanying drawings and following detailed description which illustrate and explain, by way of example, the principles of the present invention.

### BRIEF DESCRIPTION OF THE DRAWINGS

The accompanying drawings are provided to facilitate an understanding of the principles of this invention. In such drawings, FIGS. I and 2 are graphs showing the properties of a thermoplastic elastomer prepared in accordance with an embodiment of this invention.

### DETAILED DESCRIPTION OF THE INVENTION

The thermoplastic elastomer (AB)ₙ polymers of this invention include A blocks which are crystalline at temperatures below 60°C, preferably at temperatures below 75°C, and B blocks which are amorphous at temperatures down to -20°C. Each of the A and B blocks are polyethers derived from cyclic ethers. More specifically, the A blocks are derived from monomers of oxetane derivatives. The B blocks are derived from oxirane monomers and their derivatives, preferably energetic oxirane derivatives. The polymers melt at temperatures between 60°C and 120°C, and more preferably between 75°C and 100°C. The A and B blocks are mutually miscible in the melt. Consequently, the melt viscosity of the block copolymer decreases rapidly as the temperature is raised above the melting point, whereby high energy formulations may include high solids content, e.g., up to 95% by weight of solid particulates, and can be easily processed. The invention also includes other thermoplastic elastomer block structures, such as ABA tri-block polymers and AₙB star polymers. Contributing to the miscibility of the A and B blocks is their similar chemical structure. Oxetane monomer units used in forming the A blocks of the present invention are generally symmetrically-substituted oxetanes having the general formula: 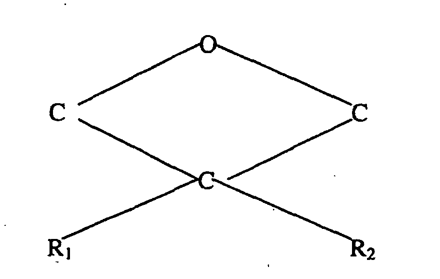 wherein the R₁ and R₂ groups are preferably the same and are selected from moieties having the general formula: -(CH₂)ₙX, where n is 0-10 and X is selected from the group consisting of -H, -NO₂, -CN, -Cl, -F, -O-alkyl, -OH, -I, -ONO₂, -N(NO₂)-alkyl, - C=CH, -Br, -CH=CH(H or alkyl), -CO₂-(H or alkyl), -N(H or alkyl)₂, -O-(CH₂)₁₋₅-O-(CH₂)₀₋₈-CH₃, and N₃.

Examples of oxetane derivatives that may be used in forming the A blocks in accordance with this invention are generally symmetrically-substituted oxetanes including, but are not limited to, the following: BEMO (3,3-(bis(ethoxymethyl)oxetane), BCMO (3,3-bis(chloromethyl)oxetane), BMMO (3,3-bis(methoxymethyl)oxetane), BFMO (3,3-bis(fluoromethyl)oxetane), BAOMO (3,3-bis(acetoxymethyl)oxetane), BHMO (3,3-bis(hydroxymethyl)oxetane), BMEMO (3,3-bis(methoxyethoxymethyl)oxetane), BIMO (3,3-bis(iodomethyl)oxetane), BNMO (3,3-bis(nitratomethyl)oxetane), BMNAMO (3,3-bis(methylnitraminomethyl)oxetane), and BAMO (3,3-bis(azidomethyl)oxetane).

Oxirane monomer units used in forming the blocks of the present invention have the general formula: 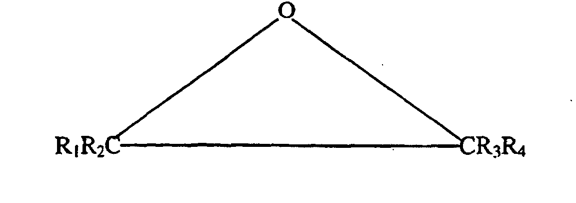 wherein R₁ and R₃ are independently selected from hydrogen and methyl, and R₂ and R₄ are independently selected from hydrogen, alkyl containing from 1 to 10 carbon atoms, chloroalkyl and bromoalkyl containing 1 to 2 carbon atoms, and nitratoalkyl, nitratoalkoxyalkyl, nitroalkyl, nitroalkoxyalkyl, azidoalkyl, azidoalkoxyalkyl, fluoronitroalkyl, and fluoronitroalkyoxyalkyl containing 1 to 5 carbon atoms provided that at least one of R₁ to R₄ is not hydrogen.

Examples of energetic oxiranes that may be used in forming the B blocks in accordance with this invention include, but are not limited to glycidyl azide polymers (C₃H₅N₃O) (GAP), especially difunctional GAP, and poly(glycidyl nitrate) (C₃H₅NO₄) (PGN). These polymers have a glass transition temperature below - 20°C and are amorphous at temperatures above -20°C.

Forming thermoplastic elastomers in accordance with the invention involves (1) formation of at least one polyoxetane-derived homopolymer, copolymer, or terpolymer serving as the A blocks and crystalline in nature with a relatively elevated melting point, i.e., between 60°C and 120°C, preferably near 80°C and (2) formation of at least one polyoxirane-derived homopolymer, copolymer, or terpolymer serving as the B blocks and amorphous in structure with a glass transition temperature (T_{g}) below -20°C.

The selection of the A block may be made based on the properties desired for the intended application of the thermoplastic elastomer. Examples of preferred crystalline A blocks include blocks possessing high energy density, such as those formed from BAMO and/or BMNAMO monomers. Melting temperature and ether oxygen content are additional factors that may be taken into consideration in selecting the monomers.

The properties of the block polymer depends upon the molecular weights of the individual blocks. Typically the A blocks have number average molecular weights ranging from 3000 to 8000, whereas the B blocks have number average molecular weights ranging from 3000 to 15,000. The weight ratio of A blocks to B blocks is preferably between 15:85 to 40:60. The preferred sizes of the A and B blocks for any particular binder application may be empirically determined.

The thermoplastic elastomers of this invention preferably are in a solid state at room temperature, have a weight average molecular weight of at least 40,000, more preferably at least 60,000, still more preferably at least 80,000, and a number average molecular weight of at least 10,000, more preferably at least 12,000, still more preferably at least 15,000.

Thermoplastic elastomers produced in accordance with the present invention may be admixed with other components of a high energy formulation, such as a propellant formulation. The binder system, in addition to the thermoplastic elastomers, may optionally contain one or more plasticizers for improving the resistance of the thermoplastic elastomer to hardening at low temperatures, which may be included at a plasticizer-to-thermoplastic elastomer weight ratio of up to about 1:1. Suitable high energy plasticizers include glycidylazide polymer (GAP), nitroglycerine, butanetriol trinitrate (BTTN), alkyl nitratomethyl nitramines, trimethylolethane trinitrate (TMETN), diethylene glycol dinitrate, triethylene glycol dinitrate (TEGDN), bis(dinitropropylacetal/-bis(dinitropropyl)formal (BDNPA/F), and mixtures thereof. Inert plasticizers can also be used. Representative inert plasticizers include, by way of example, dioctyladipate (DOA), isodecylperlargonate (IDP), dioctylphthalate (DOP), dioctylmaleate (DOM), dibutylphthalate (DBP), oleyl nitrile, triacetin, and combinations thereof. The binder system may also contain a minor amount of a wetting agent or lubricant that enables higher solids loading.

The solids content of the high energy composition generally ranges from 50 wt% to 95 wt%, higher solids loading generally being preferred so long as such loading is consistent with structural integrity. The solids include fuel material particles and powders (collectively referred to herein as particulates), such as particulate aluminum, and/or oxidizer particulates. Representative fuels include aluminum, magnesium, boron, and beryllium. Representative oxidizers and co-oxidizers include. ammonium perchlorate; hydroxylammonium nitrate (HAN); ammonium dinitramide (ADN); hydrazinium nitroformate; ammonium nitrate; nitramines such as cyclotetramethylene tetranitramine (HMX) and cyclotrimethylene trinitramine (RDX), 2,4,6,8,10,12-hexanitro-2,4,6,8,10,12-hexaazatetracyclo[5.5.0.0^{5,9}.0^{3,11} ]-dodecane or 2,4,6,8,10,12-hexanitrohexaazaisowurtzitane (CL-20 or HNIW), and/or 4,10-dinitro-2,6,8,12-tetraoxa-4,10-diazatetracyclo[5.5.0.0^{5,9}.0^{3,11}]dodecane (TEX), and any combination thereof. In addition, the high energy composition may include minor amounts of additional components known in the art, such as bonding agents, burn rate modifiers, ballistic modifiers (e.g., lead), etc.

The thermoplastic elastomer may be mixed with the solids and other components of high energy formulation at temperatures above its melting temperature. Blending may be done in conventional mixing apparatus. Because of the low viscosities of the molten polymer, no solvents are required for blending or other processing, such as extrusion.

An important advantage of having a binder which is meltable is that the elastomer from an outdated device containing can be melted down and reused. At the time of such remelting, the binder might be reformulated, e.g., by addition of additional fuel or oxidizer particulates. Accordingly, the thermoplastic elastomer provides for its eventual recycle, as opposed to the burning required for disposal of cross-linked compositions. Because the "pot life" of the thermoplastic propellant exceeds that which would reasonably be required of a propellant or explosive formulation, if any problems develop during casting, the process can be delayed as long as is reasonably necessary, merely by maintaining the formulation in a molten state.

The oxetane homopolymer blocks may be formed according to the cationic polymerization technique taught by Manser in U.S. Patent No. 4,393,199.

The oxirane homopolymer blocks may be formed according to the technique taught in U.S. Patent No. 5,120,827.
The technique employs an adduct of a substance such as a diol, e.g., 1,4-butane diol (BDO), and a catalyst for cationic polymerization, e.g., BF₃-etherate. This adduct forms with the oxetane monomer an initiating species which undergoes chain extension until n moles of monomer have been incorporated in the molecule, n being the ratio of monomers to adduct present. By adjusting the ratio of monomers to adduct present, the average molecular weight of the polymer which forms may be adjusted. If two or more monomers are present, incorporation of the monomers will be generally random but may depend upon the relative reactivities of the monomers in the polymerization reaction.

Another suitable catalyst system includes co-catalytically effective quantities of one or more triethoxonium salts and one or more alcohols, as disclosed in U.S. Application No. 08/233,219.

Examples of triethoxonium salts include triethoxonium hexafluorophosphate, triethoxonium hexafluoroantimonate, and triethoxonium tetrafluoroborate.

It is understood that although the isocyanate-reactive terminal functional groups of the blocks are referred to herein as being hydroxyl groups, the isocyanate-reactive functional groups may also be amines, amides, and/or carboxyl groups.

The crystalline polyoxetane A blocks and amorphous polyoxirane B blocks, i.e., the respective prepolymers, are each end-capped together or separately with one or more diisocyanates. The end-capped A and B blocks are mixed together and joined by a linking compound which has a pair of isocyanate-reactive functions that are sufficiently unhindered to allow them to react with the free isocyanate moieties of the end-capped copolymers and thereby join the blocks together.

Oxetane and oxirane polymer blocks normally have terminal isocyanate-reactive (e.g., hydroxyl) functions which are end-capped with the diisocyanates in accordance with the invention. Preferably, a first of the isocyanate moieties of the end-capping compound is substantially more reactive with the terminal-hydroxyl moieties of the polymer blocks than the other (second) isocyanate moiety. One of the problems with linking these types of polymer blocks is that substituted oxetane-derived hydroxyl end groups units have neopentyl structures, whereby the terminal primary hydroxyl moieties are substantially hindered and therefore less reactive. The blocks derived from oxirane derivatives are secondary alcohols, making their hydroxyl groups less reactive than the primary hydroxyl group of the oxetane-derived A-block. The diisocyanate preferably is selected so that the first of the isocyanate moieties is capable of reacting with a hydroxyl-group.of the polymer blocks while the second isocyanate moiety remains free and unreacted. Diisocyanates are preferably used because isocyanates of higher functionality would result in undesirable levels of cross-linking. The different reactivities of the isocyanate moieties is desirable to ensure that substantial chain extension through linking of like blocks does not occur. Thus, for purposes of this invention, one isocyanate moiety of the diisocyanate should preferably be approximately five times more reactive with terminal hydroxyl groups of oxetane and oxirane blocks than the other group. Preferably one isocyanate moiety is at least about ten times more reactive than the other.

One diisocyanate which is especially useful for purposes of the invention is 2,4-toluene diisocyanate (TDI) in which the isocyanate moiety in the 4-position is substantially more reactive with hindered terminal hydroxyl moieties than the isocyanate moiety in the 2-position. Isophorone diisocyanate (IPDI) is suitable for some applications, though less so than TDI. Examples of diisocyanates which have not worked well include diphenylmethylene diisocyanate (MDI) and hexamethylene diisocyanate (HDI).

In the end-capping reaction, the diisocyanate is used at an approximately stoichiometric molar amount relative to terminal hydroxyl groups on the polymer chain. Thus, if the polymer chain has a pair of terminal hydroxyl groups, approximately two molar equivalents, e.g., 1.75-2.2 molar equivalents of diisocyanate are used. In the ideal reaction, all of the more reactive isocyanate moieties would react with terminal hydroxyl groups, leaving all of the less reactive isocyanate moieties free. Practically, not all of the diisocyanate reacts in this manner, and some chain extension does occur. Thus, the end-capping reaction may be maximized for particular polymer chains by some adjustment in the relative molar ratios of polymer block and diisocyanate.

In one variant embodiment, the A blocks and B blocks are reacted separately with the diisocyanate, so that there is no competition of the blocks for diisocyanate molecules and each separate end-capping reaction may be carried to substantial completion. The diisocyanate may react more rapidly with one block than the other, but this difference can be compensated for by a longer reaction time with the slower reacting block. The reactivity of the terminal hydroxyl groups varies according to steric factors and also according to side-chain moieties. Energetic oxetanes, for example, generally have side-chain moieties that are electron-withdrawing, making their terminal hydroxyl groups less reactive. Once end-capped with diisocyanate, the reactivities of the polymers for linking purposes is essentially dependent only upon the reactivity of the free isocyanate, not on the chemical makeup of the polymer chain itself. Thus end-capped (A) blocks are substantially as reactive as end-capped (B) blocks. The end-capping of the oxirane blocks in this manner overcomes the problems associated with linking of oxirane derivative blocks, which have secondary hydroxyl groups.

The end-capping reaction and linking reaction are carried out in a suitable solvent, e.g., one which dissolves the polymer and does not react with the free isocyanate moieties. In a preferred embodiment, the solvent is non-halogenated. Although insubstantial amounts of halogenated solvent may be present, the solution is preferably completely free of any halogenated solvent. The non-halogenated solvent should not react in the urethane reaction (i.e., do not interfere with the end capping catalyst, such as dibutyl tin dilaurate, or the linking catalyst) and forms an azeotrope with water. The solvent or solvents selected preferably are capable of dissolving more than 25% by weight of the blocks (based on total weight of the solvents and blocks) into solution, more preferably at least 35% by weight into solution, and still more preferably 50% by weight into solution. Representative solvents include cyclic ethers such as tetrahydrofuran (THF) and 1,4-dioxane; non-cyclic ethers such as ethylene glycol dimethyl ether, ketones such as methyl ethyl ketone (MEK); and esters such as ethyl acetate. Of these, THF is preferred because of its excellent solubility characteristics.

In a preferred embodiment, the solvent forms an azeotrope with water. In this preferred embodiment, after the blocks are dissolved in excess non-halogenated solvent; the solution may be dried by azeotropic distillation of the solvent, and optionally further concentrated, e.g., via distillation, in the solution to increase the volumetric loading and reaction rate. The blocks then may be end-capped, separately or together, and linked in the same or a different non-halogenated solvent. By distilling off excess solvent to remove water, subsequent reaction with a diisocyanate may proceed without significant interference from competing reactions between the isocyanate moieties and water. Additionally, the solution remains homogeneous and further distillation serves to concentrate the polymer solution, producing higher reaction rates and requiring less reactor capacity. The reaction rates may be improved by conducting the end-capping reaction at elevated temperatures, such as 30°C to 80°C, more preferably 40°C to 60°C. The process may be conducted by a batch or continuous method. For example, the prepolymer and catalyst may be continuously fed through a mixer/extruder into which is injected a diisocyanate and a diol at appropriate feed rates so that urethane linking occurs within the extruder and energetic thermoplastic elastomer is continuously produced for processing.

Suitable catalysts for promoting the end-capping reaction include, as a preferred class, organic tin compounds with at least one and preferably two labile groups, such as chloride or acetate, bound directly to the tin. Suitable tin catalyst include diphenyl tin dichloride, dibutyl tin dichloride, dibutyl tin dilaurate, dibutyl tin diacetate. Tertiary amine catalysts may also be used.

The linking compound is one which has two functional groups which are sufficiently reactive and unhindered to react with the free isocyanate moieties on the end-capped blocks so as to link A blocks to B blocks,A blocks to A blocks, and B blocks to B blocks in a urethane reaction. Preferred functional groups are hydroxyl groups, although amine, amide, and carboxyl groups, and mixtures thereof also react in a urethane reaction. Primary functional groups are preferred. The linking compound may be a short, straight carbon chain having terminal hydroxyl groups, e.g., 1,4-butanediol, 1,3-propanediol, ethylene glycol, and 1,6-hexanediol.

Alternatively, the linking compound may be an oligomer, especially a urethane oligomer, having two functional groups which are sufficiently unhindered to react with the free isocyanate moieties on the end-capped blocks so as to link A blocks to B blocks, A blocks to A blocks; and B blocks to B blocks in a urethane reaction. Preferred functional groups of the oligomer are hydroxyl groups, although amine, amide, and carboxyl groups, and mixtures thereof also react in a urethane reaction. Primary functional groups are preferred.

An oligomeric glycol containing urethane moieties is preferably used to react the free isocyanate moieties on the end-capped blocks. The oligomeric glycol may be prepared from a mixture of one or more diisocyanates and an excess amount of one or more diols. The diisocyanate(s) and diol(s) selected and the molar ratio of these reagents may be varied to tailor the properties of the thermoplastic elastomer. The diol-to-diisocyanate ratio is preferably selected to be between 5:1 to 5:4, more preferably . 2:1, to maintain acceptable processing temperatures, obtain adequate linking of the isocyanate-capped prepolymers, and improve the thermomechanical properties of the final thermoplastic elastomer. A suitable urethane reaction catalyst promotes the reaction between the diisocyanate(s) and diol(s) to form oligomers. The catalysts discussed above in connection with the linking of the A and B blocks are suitable for this purpose. Representative diols that may be selected for preparing the difunctional oligomer include, by way of example, unbranched aliphatic diols having 2 to 7 carbon atoms, such as ethylene glycol, propylene glycol, butylene glycol; and cycloaliphatic diols such as 1,4-cyclohexanedimethanol, and any combination thereof. Representative diisocyanates for preparing the difunctional oligomer include, by way of example, aliphatic diisocyanates such as hexane diisocyanate, and aryl diisocyanates such as methylene-bis(4-phenyl isocyanate), phenylene diisocyanate, toluene diisocyanate, and xylylene diisocyanate, and any combination thereof. Preferably, the difunctional oligomer has a number average molecular weight Mₙ of from 350 to 900.

It is to be appreciated that a wide variety of difunctional compounds could be used for linking the end-capped blocks.

As in the end-capping reaction, some solvent is preferably used, as is a catalyst, such as described above. Conveniently, the reaction mixtures of the A blocks and B blocks may be mixed together without prior separation of the blocks from their respective end-capping reaction mixtures. The linking compound can be added directly to this mixture of A and B blocks. The catalyst is thereby already present when the linking compound is added.

The linking compound is added in an amount such that the total number of linking-compound functional groups approximately equals the total number of free isocyanate groups of the end-capped polymer blocks. Thus, to provide an (AB)ₙ polymer with multiple blocks in each chain, the linking compound to polymer block molar ratio is in the range of 0.9-1.1, e.g., 1.0. Accordingly, optimal molar ratios of blocks and linking chemicals may have to be empirically determined.

In the end-capping and block linking steps, the reaction can be followed with NMR and IR. With NMR, the urethane-forming reaction can be followed through the methylene groups on the polymer adjacent to the terminal hydroxyl groups. With IR. the change from isocyanate to urethane can be directly followed.

Synthesis of polyoxetanes is described in U.S. Patent Nos. 4,483,978 and 4,806,613.

The invention will now be described in greater detail by way of the following examples, which are not to be construed as being exhaustive as to the scope of this invention.

As referred to herein, "dry" means that less than I wt% water was present.

For the following experiments, poly(azidomethyloxirane) was supplied by 3M Speciality Chemicals of St. Paul, MN (Lot L-12564). Unless otherwise specified, all other materials were obtained from Aldrich of Milwaukee, WI.

### EXAMPLE 1 (poly(3,3-bis(azidomethyl)oxetane))

A 5 liter jacketed flask equipped with a mechanical stirrer was charged with 600 grams of tribromoneopentylalcohol (AmeriBrom, Inc. of New York), 1200 ml of toluene, and 6 grams of tetrabutylammonium bromide. The mixture was cooled to 12°C and 193 grams of sodium hydroxide was added dropwise as a 40 wt% solution keeping the temperature at 12°C. After 36 hours the reaction mixture was washed with water until the pH was less than 9 to obtain the crude product which was distilled to obtain 3,3-bis(bromomethyl)oxetane in 65% yield.

A 5 liter jacketed flask equipped with a mechanical stirrer was charged with 1450 grams of the 3,3-bis(bromomethyl)oxetane and 1720 ml of toluene. The mixture was stirred and heated to 60°C before 1600 ml of water, 14.7 grams of tetrabutylammonium bromide, and 862 grams of sodium azide were added. After 24 hours, the reaction mixture was cooled to room temperature and washed three times with 2000 ml of water. The toluene and water were removed from the organic layer by distillation to give pure 3,3-bis(azidomethyl)oxetane in 85% yield.

Under an argon atmosphere, 14.94 grams of butane diol was added to a flame dried 5 liter round-bottomed flask charged with 1340 ml of dry methylene chloride. To this mixture, 11.77 grams of borontrifluoride-etherate was added and the reaction was allowed to proceed for one hour at room temperature. The reactor was then cooled to -10°C and 937.78 grams of the 3,3-bis(azidomethyl)oxetane was added. The solution was allowed to come to room temperature and left to react for three days. The reaction was then quenched by the addition of 50 ml of saturated brine solution. The organic phase was separated off and washed with 100 ml of 10 wt% sodium bicarbonate solution before the solvent was removed on a rotovapor. The resulting liquid was then poured into 5 liters of methanol to precipitate the polymer, which was filtered from the solution and dried under vacuum at 30°C.

### EXAMPLE 2 (poly(3-azidomethyl-3-methyloxetane))

A 5 liter jacketed flask equipped with a mechanical stirrer was charged with 1062 grams of sodium azide, 1972 ml of water, and 2450 grams of 3-bromomethyl-3-methyloxetane (supplied by AmeriBrom, Inc. of New York). This mixture was brought to reflux with vigorous mixing. After 48 hours the mixture was cooled to room temperature. The organic layer was separated off and washed three times with 1000 ml of water before being dried over molecular sieves to yield pure 3-azidomethyl-3-methyloxetane in 85% yield.

Under an argon atmosphere, 14.94 grams of butane diol was added to a flame dried 5 liter round-bottomed flask charged with 1:340 ml of dry methylene chloride. To this mixture, 11.77 grams of borontrifluoride-etherate was added and the reaction was allowed to proceed for one hour at room temperature. The reactor was then cooled to -10°C and 937.78 grams of the 3-azidomethyl-3-methyloxetane was added. The solution was allowed to come to room temperature and left to react for three days. The reaction was then quenched by the addition of 50 ml of saturated brine solution. The organic phase was separated off and washed with 100 ml of 10 wt% sodium bicarbonate solution before the solvent was removed on a rotovapor. The resulting liquid was then poured into 5 liters of methanol to precipitate the polymer, which was 'filtered from the solution and dried under vacuum at 30°C.

### EXAMPLE 3 (Random block copolymer of poly(azidomethyloxirane) and poly(3,3-bis(azidomethyl)oxetane))

In a 250 ml round bottom flask, 19.62 grams of dry difunctional poly(azidomethyloxirane) with a hydroxyl equivalent weight of 1269 and 6.63 grams of dry poly(3,3-bis(azidomethyl)oxetane) with a hydroxyl equivalent weight of 3017 were dissolved in 80 ml of dry methylene chloride. The solution was concentrated by evaporation of the methylene chloride via a rotovapor until the solution became cloudy. To this solution, 0.12 ml of dibutyltin dilaurate and 3.11 grams of toluene-2,4-diisocyanate were added while stirring with a magnetic-driven stirrer at ambient temperature and pressure. After four hours, 0.805 grams of butane-1,4-diol was added, causing the solution to become steadily more viscous. After another 18 hours, the solution was too viscous to stir with the magnetic-driven stirrer and it was diluted with 50 ml of methylene chloride before being poured into methanol in a volume ratio of 1:5. The methanol was decanted off, and the precipitated polymer was washed three times with fresh methanol (1:5 volume ratio) to give a rubbery granular product with the following properties:
Mn = 28440
Mw = 219500
Mw/Mn = 7.7
_{E}^{1.0}(psi) = 511
εₘ(%) = 251
ε_{f} (failure) (%) = 269
σₘ (psi) = 194
σₘ (corrected) (psi) = 702
ShoreA = 52
Density = 1.31 g/cm³

(E^{1.0} represents Young's Modulus. εₘ and ε_{f}, respectively representing maximum measured strain and calculated failure strain, and σₘ and σₘ (corrected), respectively representing measured maximum stress and calculated connected maximum stress, were measured using an INSTRON model 1225. The crosshead speed was 0.6 inches per minute. Measurements were made at room temperature using 20 mm x 4 mm dumbell samples. ShoreA representing hardness was measured on a Shore Conveloader at room temperature.)

### EXAMPLE 4 (Random block copolymer of poly(nitratomethyloxirane) and poly(3,3-bis(azidomethyl)oxetane))

In a 100 ml round bottom flask, a dried solution of 22.69 grams of difunctional poly(nitratomethyloxirane) (supplied by Thiokol of Elkton, Md., now Cordant Technologies Inc.) with a hydroxyl equivalent weight of 1285 and 9.73 grams of poly(3,3-bis(azidomethyl)oxetane) with a hydroxyl equivalent weight of 3017 was dissolved in 45 ml of dry methylene chloride. The solution was concentrated by evaporation of the methylene chloride via a rotovapor until the solution became cloudy. To this solution, 0.152 ml of dibutyltin dilaurate and 3.637 grams of toluene-2,4-diisocyanate were added and stirred with a magnetic-driven stirrer at ambient temperature and pressure. After three days, 0.941 grams of butane-1,4-diol was added, causing the solution to become steadily more viscous. After one more day, the solution was too viscous to stir with the magnetic-driven stirrer, and was diluted with 30 ml of methylene chloride and 4 ml of methanol before being poured into methanol in a volume ratio of 1:5. The methanol was decanted off, and the precipitated polymer was washed three times with fresh methanol (1:5 volume ratio) to give a rubbery granular product with the following properties:
Mn = 15020
Mw = 105900
Mw/Mn = 7.1
E^{1.0}(psi) = 581
εₘ(%) = 325
ε_{f} (failure) (%) = 358
σₘ (psi) = 182
σₘ (corrected) (psi) = 806
ShoreA = 58
Density = 1.42 g/cm³

### EXAMPLE 5 (Random block copolymer of poly(azidomethyloxirane) and poly(3,3-bis(azidomethyl)oxetane))

In a 250 ml round bottom flask, a dry solution of 15.0 grams of difunctional poly(azidomethyloxirane) with a hydroxyl equivalent weight of 1174 and 5.0 grams of poly(3,3-bis(azidomethyl)oxetane) with a hydroxyl equivalent weight of 1626 was dissolved in 60 ml of tetrahydrofuran. The solution was concentrated by evaporation of the tetrahydrofuran via a rotovapor until 6.6 grams of solvent remained. To this solution, 1 ml of dibutyltin dilaurate was added and the solution was warmed to 50°C. The solution was stirred with a magnetic-driven stirrer and 2.76 grams of toluene-2,4-diisocyanate were added. After four minutes, 0.714 grams of butane-1,4-diol was added, causing the solution to become more viscous rapidly. After another 2 minutes, the solution was quenched by adding a solution of 2 ml of methanol in 30 ml of tetrahydrofuran. This solution was then poured into methanol in a volume ratio of 1:5. The methanol was decanted off, and the precipitated polymer was washed three times with fresh methanol (1:5 volume ratio) to give a rubbery granular product with the following properties:
Mn = 21420
Mw = 298500
Mw/Mn =14
E^{1.0}(psi) = 271
εₘ(%) = 161
ε_{f} (failure) (%) = 178
σₘ(psi) = 100
σₘ (corrected) (psi) = 256
ShoreA = 41

### EXAMPLE 6 (Random block copolymer of poly(azidomethyloxirane) and poly(3,3-bis(azidomethyl)oxetane))

In a 25 ml round bottom flask, a urethane oligomer was prepared by dissolving 1.55 grams of toluene-2,4-diisocyanate in 4 ml tetrahydrofuran and adding to the solution 0.1 ml of dibutyltin dilaurate followed by 1.60 grams of butane-1,4-diol.

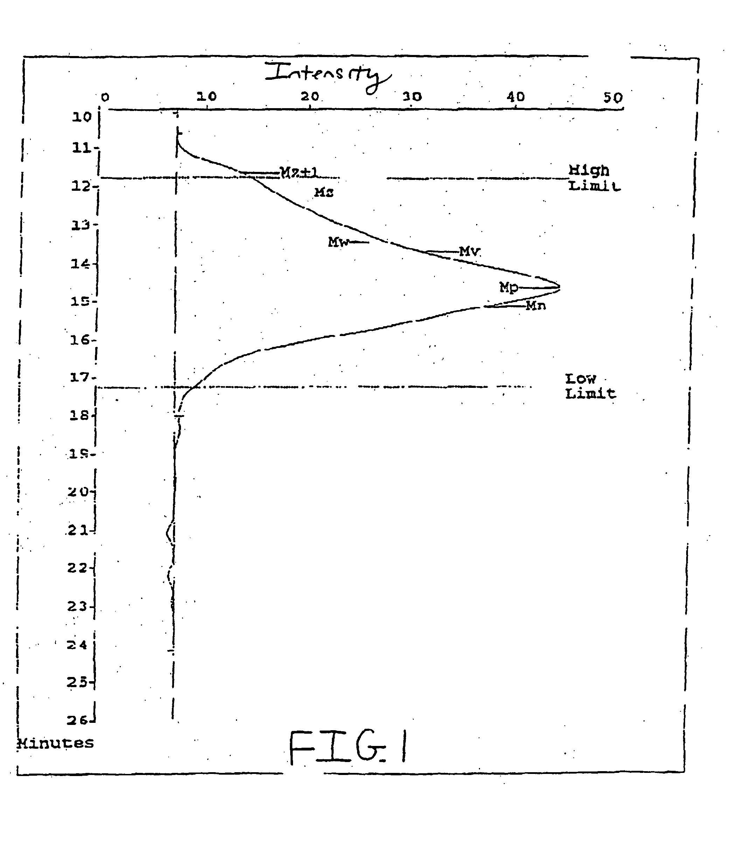

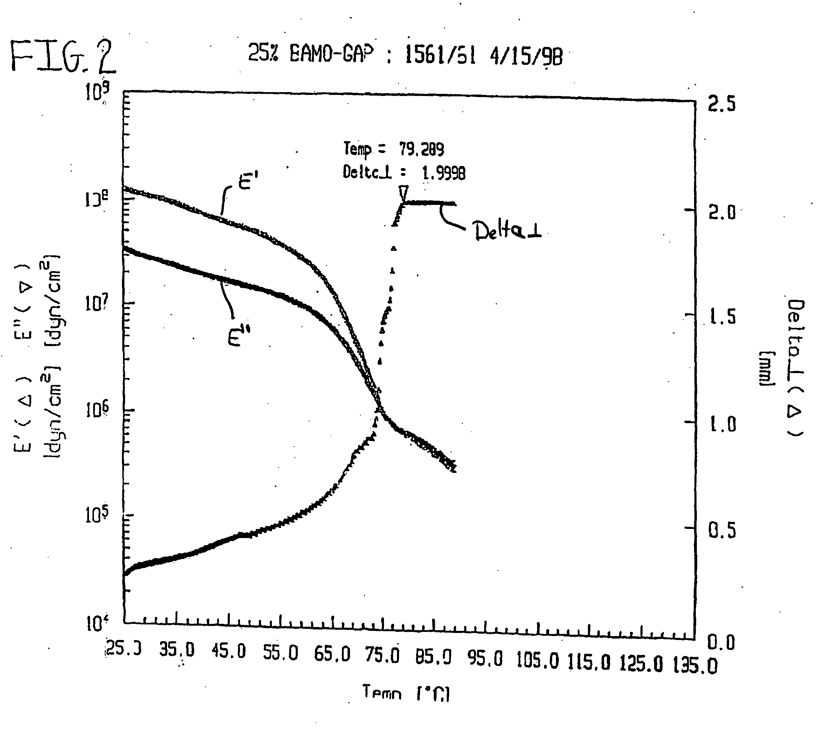

In a separate 250 ml round bottom flask, 17.94 grams of dry difunctional poly(azidomethyloxirane) with a hydroxyl equivalent weight of 1174 and 6.63 grams of dry poly(3,3-bis(azidomethyl)oxetane) with a hydroxyl equivalent weight of 2390 were dissolved in 100 ml of tetrahydrofuran. The solution was concentrated and dried by evaporation of the tetrahydrofuran via a rotovapor under reduced pressure until 20 grams of solvent remained. To this solution, 0.75 ml of dibutyltin dilaurate and 3.097 grams of toluene-2,4-diisocyanate were added while stirring with a magnetic-driven stirrer. After 1 hours, the urethane oligomer was added to this solution, causing it to become steadily more viscous. After 20 minutes, the was too viscous to stir with the magnetic-driven stirrer and it was diluted with 20 ml of dry tetrahydrofuran, and then allowed to react for a further 20 minutes before being poured into methanol in a volume ratio of 1:5. The precipitated polymer was washed three times with fresh methanol (1:5 volume ratio) to give a rubbery granular product with the properties shown in FIGS. 1 and 2 and set forth below:
Mn = 26240
Mw = 175500
Mw/Mn = 6.69

Molecular weight distribution was determined by gel permeation chromotography using polystyrene standards, with the results shown in FIG. 1. The GPC trace in FIG. 1 demonstrates that the prepolymers were linked to produce a copolymer having a higher molecular weight and dispersivity than the homopolymer blocks. The DMA trace in FIG. 2 shows the melt transition of random block (BAMO-GAP)ₙ at 75-80°C with a material modulus reducing only slowly before this point.

## Claims

1. An energetic thermoplastic elastomer having polyetherA blocks and polyether B blocks and being present in a solid state suitable for use as a binder for at least one of a propellant, explosive, and gasifier, the energetic thermoplastic elastomer being formed from a composition comprising, as constituents :
polyether A blocks terminated with isocyanate-reactive groups derived from monomers comprising one or more oxetane derivatives, the polyetherA blocks being crystalline at temperatures below 60°C;
polyether B blocks terminated with secondary hydroxyl groups derived from monomers comprising at least one member selected from the group consisting of oxirane and derivatives thereof, the polyether B blocks being amorphous at temperatures above -20°C; and
linked groups derived from at least one diisocyanate and at least one linking compound comprising two functional groups which are reactive with the isocyanate moieties of the diisocyanate.

2. An energetic thermoplastic elastomer as defined in claim 1, wherein:
the diisocyanate contains a first isocyanate moiety which is at least five times more reactive with the terminal groups of the blocks than a second isocyanate moiety thereof, whereby the more reactive first isocyanate moiety is capable of reacting with and end capping the terminal groups of the blocks, leaving the less reactive second isocyanate moiety free and unreacted; and
the linking compound has two isocyanate-reactive groups which are sufficiently sterically unhindered to be reactive with the free and unreacted moieties of the end-capped blocks.

3. An energetic thermoplastic elastomer as defined in claim 2, wherein the diisocyanate comprises 2, 4- toluene diisocyanate.

4. An energetic thermoplastic elastomer as defined in claim 1, wherein the polyether A blocks are crystalline at temperatures below 75 °C.

5. Am energetic thermoplastic elastomer as defined in claim 1, wherein the polyether A blocks comprise homopolymers, copolymers, or terpolymers derived from one or more symmetrically-substituted oxetane monomers comprising at least one member selected from the group consisting of 3,3-bis (methylnitraminomethyl) oxetane and 3,3-bis (azidomethyl) oxetane.

6. An energetic thermoplastic elastomer as defined in claim 1, wherein the polyether B blocks comprise a difunctional glycidyl azide polymer.

7. An energetic thermoplastic elastomer as defined in claim 1, wherein the polyether B blocks comprise poly(glycidyl nitrate).

8. An energetic thermoplastic elastomer as defined in claim 1, wherein the thermoplastic elastomer has a weight average molecular weight of at least 40,000 and a number average molecular weight of at least 10,000.

9. An energetic thermoplastic elastomer as defined in claim 1, wherein the thermoplastic elastomer has a weight average of at least 60,000 and a number average molecular weight of at least 12,000.

10. An energetic thermoplastic elastomer as defined in claim 1, wherein the thermoplastic elastomer has a weight average molecular weight of at least 80,000 and a number average molecular weight of at least 15,000.

11. An energetic thermoplastic elastomer as defined in claim 1, wherein a weight ratio of polyether A to polyether B blocks is between 15:85 to 40:60.

12. An energetic thermoplastic elastomer as defined in claim 1, wherein the isocyanate-reactive terminal groups of the polyether A blocks are hydroxyl groups.

13. A composition comprising:
50 wt% to 95 wt% of at least one solid selected from the group consisting of fuel particulates and oxidizer particulates; and
at least one energetic thermoplastic elastomer as defined in claim 1.

14. A composition as defined in claim 13, wherein:
the diisocyanate contains a first isocyanate moiety which is substantially more reactive with terminal groups of the blocks than a second isocyanate moiety thereof, whereby the more reactive first isocyanate moiety is capable of reacting with and end capping the terminal groups of the blocks, leaving the less reactive second isocyanate moiety free and unreacted; and
the linking compound has two isocyanate-reactive groups which are sufficiently sterically unhindered to be reactive with the free and unreacted second isocyanate moieties of the end-capped blocks.

15. A composition as defined in claim 13, wherein the polyether A blocks are crystalline at temperatures below 75 °C.

16. A composition as defined in claim 13, wherein the polyether A blocks comprise homopolymers, copolymers, or terpolymers derived from one or more symmetrically-substituted oxetane monomers comprising at least one member selected from the group consisting of 3,3-bis(methylnitraminomethyl) oxetane and 3,3-bis(azidomethyl) oxetane.

17. A composition as defined in claim 13, wherein the polyether B blocks comprise a difunctional glycidyl azide polymer.

18. A composition as defined in 13, wherein the polyether B blocks comprise poly(glycidyl nitrate).

19. A composition as defined in claim 13, wherein the solid comprises as least one member selected from the group consisting of aluminium, ammonium perchlorate, and ammonium nitrate.

20. A composition as defined in claim 13, further comprising at least one member selected from the group consisting of cyclotetramethylene tetranitramine (HMX), cyclotrimethylene trinitramine (RDX), 2,4,6,8,10,12-hexanitro-2,4,6,8,10,12-hexaazatetracyclo[5.5.0.0^{5,9}.0^{3,11}] (CL20), and 4,10-dinitro-2,6,8,12-tetraoxa-4,10-diazatetracyclo[5.5.0.0^{5,9}.0^{3,11}] dodecane (TEX).

21. A composition a defined in claim 13, further comprising at least one high energy plasticizer selected from the group consisting of nitroglycerine, butanetriol trinitrate (BTTN), alkyl nitratomethyl nitramines, trimethylolethane trinitrate (TMETN), diethylene glycol dinitrate, triethylene glycol dinitrate, glycidyl azide polymer (GAP), and bis (dinitropropylacetal/-bis(dinitropropyl) formal (BDNPA/F).

22. A composition as defined in claim 13, wherein the isocyanate-reactive terminal groups of the polyether A blocks are hydroxyl groups.

23. A rocket motor propellant comprising the composition defined in claim 13.

24. A gun propellant comprising the composition defined in claim 13.

25. An explosive comprising the composition defined in claim 13.

26. A gasifier comprising the composition defined in claim 13.

27. A method of preparing an energetic thermoplastic elastomer having polyether A blocks which are crystalline at temperatures below 60°C and B blocks which are amorphous at temperatures above -20°C, the polyether A blocks being polyethers derived from monomers comprising-oxetane derivatives, the polyether B blocks being polyethers derived from monomers comprising at least one member selected from the group consisting of oxiranes and derivatives thereof, the method comprising:
providing the polyether A blocks and the polyether B blocks at approximately stoichiometric ratios intended to be present in the energetic thermoplastic elastomer, the polyether A blocks being terminated with isocyanate-reactive functional groups derived from monomers comprising oxetane derivatives and crystalline at temperatures below 60°C, the polyether B blocks being terminated with secondary hydroxyl groups, derived from monomers comprising at least one member selected from the group consisting of oxiranes and derivatives thereof, and amorphous at temperatures above -20°C;
end-capping the polyether A blocks and the polyether B blocks by reacting the polyether A blocks and the polyether B blocks with at least one diisocyanate in which at least a first isocyanate moiety therof is substantially more reactive with the terminal groups of the blocks than a second isocyanate moiety thereof, whereby the more reactive first isocyanate moiety is capable of reacting with the terminal groups of the blocks, leaving the less reactive second isocyanate moiety free and unreacted; and
reacting the end-capped polyether A blocks and the end-capped polyether B blocks together with a linking compound having two isocyanate-reactive groups which are sufficiently unhindered to reactive with the free and unreacted second isocyanate moieties of the end-capped blocks.

28. A method as defined in claim 27, wherein the diisocyanate comprises 2,4-toluene diisocyanate.

29. A method as defined in claim 27, wherein the polyether A blocks are crystalline at temperatures below 75°C.

30. A method as defined in claim 27, wherein the polyether A blocks are homopolymers, copolymers, or terpolymers derived from one or more symmetrically-substituted oxetane monomers comprising at least one member selected from the group consisting of 3,3-bis(methylnitraminomethyl)oxetane and 3,3-bis(azidomethyl)oxetane.

31. A method as defined in claim 27, wherein the polyether B blocks comprise a difunctional glycidyl azide polymer.

32. A method as defined in claim 27, wherein the polyether B blocks comprise poly(glycidyl nitrate).

33. A method as defined in claim 27, wherein the thermoplastic elastomer has a weight average molecular weight of at least 40,000 and a number average molecular weight of at least 10,000.

34. A method as defined in claim 27, wherein the thermoplastic elastomer has a weight average molecular weight of at least 60,000 and a number average molecular weight of at least 12,000.

35. A method as defined in claim 27, wherein the thermoplastic elastomer has a weight average molecular weight of at least 80,000 and a number average molecular weight of at least 15,000.

36. A method as defined in claim 27, wherein a weight ratio of polyether A to polyether B blocks is between 15:85 to 40:60.

37. A method as defined in claim 27, wherein the isocyanate-reactive terminal groups of the polyether A blocks are hydroxyl groups.

38. An energetic thermoplastic elastomer as defined in claim 1, wherein the polyether A blocks have a melting point between 60°C and 120°C.

39. An energetic thermoplastic elastomers as defined in claim 1, wherein the polyether A blocks have a melting point between 75°C and 100°C.

40. An energetic thermoplastic elastomer having polyether A blocks and polyether B blocks and being present in a solid state suitable for use as a binder for at least one of a propellant, explosive and gasifier, the energetic thermoplastic elastomer being formulated from a composition comprising, as constituents;
polyether A blocks terminated with isocyanate-reactive groups derived from monomers comprising at least one member selected from the group consisting of 3,3-(bis(ethoxymethyl)oxetane, 3,3- bis(chloromethyl)oxetane, 3,3- bis(methoxymethyl)oxetane, 3,3- bis(fluoromethyl)oxetane, 3,3-bis(acetoxymethyl)oxetane, 3,3-bis(acetoxymethyl)oxetane, 3,3-bis(hydroxymethyl)oxetane, 3,3-bis(methoxyethoxymethyl)oxetane, 3,3- bis(iodomethyl)oxetane, 3,3-bis(nitratomethyl)oxetane, 3,3- bis(methylnitraminomethyl)oxetane, and 3,3-bis(azidomethyl)oxetane;
polyether B blocks terminated with secondary hydroxyl groups derived from monomers comprising at least one member selected from the group consisting of glycidyl azide polymer and poly(glycidyl nitrate); and
linking groups derived from at least one diisocyanate and at least one linking compound comprising two functional groups which are reactive with isocyanate moieties of the diisocyanate.

## Patentansprüche

1. Energetisches thermoplastisches Elastomer mit Polyether-A-Blöcken und Polyether-B-Blöcken, das in einem festen Zustand vorliegt, der für die Verwendung als Bindemittel für ein Treibmittel, einen Explosivstoff und/oder Vergaser geeignet ist, wobei das energetische thermoplastische Elastomer aus einer Zusammensetzung gebildet ist, die als Bestandteile umfasst:
Polyether-A-Blöcke, die endständige Isocyanat-reaktive Gruppen aufweisen, welche von Monomeren abgeleitet sind, die ein oder mehrere Oxetan-Derivate umfassen, wobei die Polyether-A-Blöcke bei Temperaturen unterhalb von 60°C kristallin sind;
Polyether-B-Blöcke, die endständige sekundäre Hydroxylgruppen aufweisen, die von Monomeren abgeleitet sind, die mindestens ein Mitglied ausgewählt aus der Gruppe bestehend aus Oxiran und Derivaten davon umfassen, wobei die Polyether-B-Blöcke bei Temperaturen über -20°C amorph sind und
vernetzte Gruppen, die von einem Diisocyanat und mindestens einer vernetzenden Verbindung, die zwei funktionelle Gruppen umfasst, die gegenüber den Isocyanatgruppen des Diisocyanats reaktiv sind, abgeleitet sind.

2. Energetisches thermoplastisches Elastomer nach Anspruch 1, worin das Diisocyanat eine erste Isocyanatgruppe enthält, die mindestens 5-mal reaktiver gegenüber den Endgruppen des Blocks ist als die zweite Isocyanatgruppe davon, wobei die reaktivere erste Isocyanatgruppe in der Lage ist, mit den Endgruppen des Blocks zu reagieren und sie zu terminieren, wobei die weniger reaktive zweite Isocyanatgruppe frei und unumgesetzt bleibt und
die vernetzende Verbindung zwei Isocyanat-reaktive Gruppen aufweist, die ausreichend sterisch ungehindert sind, um mit den freien und unumgesetzten Gruppen der terminierten Blöcke zu reagieren.

3. Energetisches thermoplastisches Elastomer nach Anspruch 2, worin das Diisocyanat 2,4-Toluoldiisocyanat umfasst.

4. Energetisches thermoplastisches Elastomer nach Anspruch 1, worin die Polyether-A-Blöcke bei Temperaturen unter 75°C kristallin sind.

5. Energetisches thermoplastisches Elastomer nach Anspruch 1, worin die Polyether-A-Blöcke Homopolymere, Copolymere oder Terpolymere umfassen, die von einem oder mehreren symmetrisch substituierten Oxetan-Monomeren abgeleitet sind, die mindestens ein Mitglied aus der Gruppe bestehend aus 3,3-bis(Methylnitraminomethyl)oxetan und 3,3-bis(Azidomethyl)oxetan umfassen.

6. Energetisches thermoplastisches Elastomer nach Anspruch 1, worin die Polyether-B-Blöcke ein difunktionelles Glycidylazidpolymer umfassen.

7. Energetisches thermoplastisches Elastomer nach Anspruch 1, worin die Polyether-B-Blöcke Poly(glycidylnitrat) umfassen.

8. Energetisches thermoplastisches Elastomer nach Anspruch 1, worin das thermoplastische Elastomer ein gewichtsmittleres Molekulargewicht von mindestens 40000 und ein zahlenmittleres Molekulargewicht von mindestens 10000 aufweist.

9. Energetisches thermoplastisches Elastomer nach Anspruch 1, worin das thermoplastische Elastomer ein gewichtsmittleres Molekulargewicht von mindestens 60000 und ein zahlenmittleres Molekulargewicht von mindestens 12000 aufweist.

10. Energetisches thermoplastisches Elastomer nach Anspruch 1, worin das thermoplastische Elastomer ein gewichtsmittleres Molekulargewicht von mindestens 80000 und ein zahlenmittleres Molekulargewicht von mindestens 15000 aufweist.

11. Energetisches thermoplastisches Elastomer nach Anspruch 1, worin das Gewichtsverhältnis von Polyether-A- zu Polyether-B-Blöcken zwischen 15:85 bis 40:60 liegt.

12. Energetisches thermoplastisches Elastomer nach Anspruch 1, worin die Isocyanat-reaktiven Endgruppen der Polyether-A-Blöcke Hydroxylgruppen sind.

13. Zusammensetzung umfassend:
50 bis 95 Gew.-% mindestens eines Feststoffs ausgewählt aus der Gruppe bestehend aus Brennstoffteilchen und Oxidationsmittelteilchen und
mindestens ein energetisches thermoplastisches Elastomer nach Anspruch 1.

14. Zusammensetzung nach Anspruch 13, worin das Diisocyanat eine erste Isocyanatgruppe enthält, die wesentlich reaktiver gegenüber den Endgruppen des Blocks ist als die zweite Isocyanatgruppe davon, wobei die reaktivere erste Isocyanatgruppe in der Lage ist, mit den Endgruppen des Blocks zu reagieren und sie zu terminieren, wobei die weniger reaktive zweite Isocyanatgruppe frei und unumgesetzt bleibt, und
die vernetzende Verbindung zwei Isocyanat-reaktive Gruppen aufweist, die ausreichend sterisch ungehindert sind, um mit den freien und unumgesetzten zweiten Isocyanatgruppen der terminierten Blöcke zu reagieren.

15. Zusammensetzung nach Anspruch 13, worin die Polyether-A-Blöcke bei Temperaturen unter 75°C kristallin sind.

16. Zusammensetzung nach Anspruch 13, worin die Polyether-A-Blöcke Homopolymere, Copolymere oder Terpolymere umfassen, die von einem oder mehreren symmetrisch substituierten Oxetan-Monomeren abgeleitet sind, die mindestens ein Mitglied aus der Gruppe bestehend aus 3,3-bis(Methylnitraminomethyl)-oxetan und 3,3-bis(Azidomethyl)oxetan umfassen.

17. Zusammensetzung nach Anspruch 13, worin die Polyether-B-Blöcke ein difunktionelles Glycidylazidpolymer umfassen.

18. Zusammensetzung nach Anspruch 13, worin die Polyether-B-Blöcke Poly(glycidylnitrat) umfassen.

19. Zusammensetzung nach Anspruch 13, worin der Feststoff mindestens ein Mitglied ausgewählt aus der Gruppe bestehend aus Aluminium, Ammoniumperchlorat und Ammoniumnitrat umfasst.

20. Zusammensetzung nach Anspruch 13, weiterhin umfassend mindestens ein Mitglied ausgewählt aus der Gruppe bestehend aus Cyclotetramethylentetranitramin (HMX), Cyclotrimethylentrinitramin (RDX), 2,4,6,8,10,12-Hexanitro-2,4,6,8,10,12-hexaazatetracyclo [5.5.0.0^{5,9}.0^{3,11}] (CL20) und 4,10-Dinitro-2,6,8,12-tetraoxa-4,10-diazatetracyclo [5.5.0.0^{5,9}.0^{3,11}] dodecan (TEX).

21. Zusammensetzung nach Anspruch 13, weiterhin umfassend mindestens einen hochenergetischen Weichmacher ausgewählt aus der Gruppe bestehend aus Nitroglycerin, Butantrioltrinitrat (BTTN), Alkylnitratomethylnitraminen, Trimethylolethantrinitrat (TMETN), Diethylenglycoldinitrat, Triethylenglycoldinitrat, Glycidylazidpolymer (GAP) und bis(Dinitropropylacetal/-bis(Dinitropropyl)formal (BDNPA/F).

22. Zusammensetzung nach Anspruch 13, worin die Isocyanatreaktiven Endgruppen der Polyether-A-Blöcke Hydroxylgruppen sind.

23. Treibmittel für einen Raketenantrieb, umfassend die Zusammensetzung nach Anspruch 13.

24. Schießpulver bzw. Treibmittel für Geschosse, umfassend die Zusammensetzung nach Anspruch 13.

25. Sprengstoff, umfassend die Zusammensetzung nach Anspruch 13.

26. Vergaser, umfassend die Zusammensetzung nach Anspruch 13.

27. Verfahren zur Herstellung eines energetischen thermoplastischen Elastomeren mit Polyether-A-Blöcken, die bei Temperaturen unterhalb von 60°C kristallin sind, und -B-Blöcken, die bei Temperaturen über -20°C amorph sind, wobei die Polyether-A-Blöcke Polyether sind, die sich von Monomeren ableiten, die Oxetanderivate umfassen, wobei die Polyether-B-Blöcke Polyether sind, die sich von Monomeren ableiten, die mindestens ein Mitglied ausgewählt aus der Gruppe bestehend aus Oxiran und Derivaten davon umfassen, wobei das Verfahren umfasst:
Bereitstellung der Polyether-A-Blöcke und der Polyether-B-Blöcke in ungefähr stöchiometrischen Verhältnissen, die in dem energetischen thermoplastischen Elastomeren vorhanden sein sollen, wobei die Polyether-A-Blöcke mit Isocyanatreaktiven funktionellen Gruppen terminiert werden, die sich von Monomeren ableiten, die Oxetanderivate umfassen und bei Temperaturen unter 60°C kristallin sind, wobei die Polyether-B-Blöcke mit sekundären Hydroxylgruppen terminiert werden, die sich von Monomeren ableiten, die mindestens ein Mitglied ausgewählt aus der Gruppe bestehend aus Oxiranen und Derivaten davon umfassen, und bei Temperaturen über -20°C amorph sind,
Terminieren der Polyether-A-Blöcke und der Polyether-B-Blöcke durch Umsetzung der Polyether-A-Blöcke und der Polyether-B-Blöcke mit mindestens einem Diisocyanat, indem mindestens eine erste Isocyanatgruppe davon wesentlich reaktiver gegenüber den Endgruppen des Blocks ist als eine zweite Isocyanatgruppe davon, wobei die erste reaktivere Isocyanatgruppe in der Lage ist, mit den Endgruppen des Blocks zu reagieren, wobei die weniger reaktive zweite Isocyanatgruppe frei und unumgesetzt bleibt, und
Umsetzen der terminierten Polyether-A-Blöcke und der terminierten Polyether-B-Blöcke zusammen mit einer vernetzenden Verbindung, die zwei Isocyanat-reaktive Gruppen aufweist, die ausreichend ungehindert sind, um mit den freien und unumgesetzten zweiten Isocyanatgruppen der terminierten Blöcke zu reagieren.

28. Verfahren nach Anspruch 27, worin das Diisocyanat 2,4-Toluoldiisocyanat umfasst.

29. Verfahren nach Anspruch 27, worin die Polyether-A-Blöcke bei Temperaturen unter 75°C kristallin sind.

30. Verfahren nach Anspruch 27, worin die Polyether-A-Blöcke Homopolymere, Copolymere oder Terpolymere umfassen, die von einem oder mehreren symmetrisch substituierten Oxetan-Monomeren abgeleitet sind, die mindestens ein Mitglied aus der Gruppe bestehend aus 3,3-bis(Methylnitraminomethyl)oxetan und 3,3-bis(Azidomethyl)oxetan umfassen.

31. Verfahren nach Anspruch 27, worin die Polyether-B-Blöcke ein difunktionelles Glycidylazidpolymer umfassen.

32. Verfahren nach Anspruch 27, worin die Polyether-B-Blöcke Poly(glycidylnitrat) umfassen.

33. Verfahren nach Anspruch 27, worin das thermoplastische Elastomer ein gewichtsmittleres Molekulargewicht von mindestens 40000 und ein zahlenmittleres Molekulargewicht von mindestens 10000 aufweist.

34. Verfahren nach Anspruch 27, worin das thermoplastische Elastomer ein gewichtsmittleres Molekulargewicht von mindestens 60000 und ein zahlenmittleres Molekulargewicht von mindestens 12000 aufweist.

35. Verfahren nach Anspruch 27, worin das thermoplastische Elastomer ein gewichtsmittleres Molekulargewicht von mindestens 80000 und ein zahlenmittleres Molekulargewicht von mindestens 15000 aufweist.

36. Verfahren nach Anspruch 27, worin das Gewichtsverhältnis von Polyether-A- zu Polyether-B-Blöcken zwischen 15:85 bis 40:60 liegt.

37. Verfahren nach Anspruch 27, worin die Isocyanat-reaktiven Endgruppen der Polyether-A-Blöcke Hydroxylgruppen sind.

38. Energetisches thermoplastisches Elastomer nach Anspruch 1, worin die Polyether-A-Blöcke einen Schmelzpunkt zwischen 60°C und 120°C aufweisen.

39. Energetisches thermoplastisches Elastomer nach Anspruch 1, worin die Polyether-A-Blöcke einen Schmelzpunkt zwischen 75°C und 100°C aufweisen.

40. Energetisches thermoplastisches Elastomer mit Polyether-A-Blöcken und Polyether-B-Blöcken, das in einem festen Zustand vorliegt, der für die Verwendung als Bindemittel für ein Treibmittel, einen Sprengstoff und/oder einen Vergaser geeignet ist, wobei das energetische thermoplastische Elastomer aus einer Zusammensetzung formuliert ist, die als Bestandteile umfasst:
Polyether-A-Blöcke, die mit Isocyanat-reaktiven Gruppen terminiert sind, die sich von Monomeren ableiten, die mindestens ein Mitglied ausgewählt aus der Gruppe bestehend aus 3,3-(bis(Ethoxymethyl)oxetan, 3,3-bis(Chlormethyl)oxetan, 3,3-bis(Methoxymethyl)oxetan, 3,3-bis(Fluormethyl)oxetan, 3,3-bis(Acetoxymethyl)oxetan, 3,3-bis(Acetoxymethyl)oxetan, 3,3-bis(Hydroxymethyl)oxetan, 3,3-bis(Methoxyethoxymethyl)oxetan, 3,3-bis(lodmethyl)oxetan, 3,3-bis(Nitratmethyl)oxetan, 3, 3-bis(Methylnitraminomethyl)oxetan und 3,3-bis(Azidomethyl)oxetan umfassen;
Polyether-B-Blöcke, die mit sekundären Hydroxylgruppen terminiert sind, die sich von Monomeren ableiten, die mindestens ein Mitglied ausgewählt aus der Gruppe bestehend aus Glycidylazidpolymer und Poly(glycidylnitrat) umfassen und
vernetzende Gruppen, die sich von mindestens einem Diisocyanat und mindestens einer vernetzenden Verbindung ableiten, die zwei funktionelle Gruppen umfasst, die gegenüber den Isocyanatgruppen des Diisocyanats reaktiv sind.

## Revendications

1. Elastomère thermoplastique énergétique ayant des blocs de polyéther A et des blocs de polyéther B et étant présent dans un état solide adéquat pour une utilisation comme un liant pour au moins un composé choisi dans le groupe comprenant un propergol, un explosif, et un gazogène, l'élastomère thermoplastique énergétique étant formé à partir d'une composition comprenant comme constituants :
des blocs de polyéther A terminés avec des groupes réactifs envers les isocyanates dérivés de monomères comprenant un ou plusieurs dérivés de l'oxétane, les blocs de polyéther A étant cristallins à des températures inférieures à 60°C ;
des blocs de polyéther B terminés avec des groupes hydroxyles secondaires dérivés de monomères comprenant au moins un membre choisi parmi les éléments du groupe comprenant l'oxyrane et ses dérivés, les blocs de polyéther B étant amorphes à des températures supérieures à -20°C ; et
des groupes liés dérivés d'au moins un diisocyanate et au moins un composé de liaison comprenant deux groupes fonctionnels qui sont réactifs avec les groupes isocyanates du diisocyanate.

2. Elastomère thermoplastique énergétique selon la revendication 1, dans lequel :
le diisocyanate contient un premier groupe isocyanate qui est au moins cinq fois plus réactif avec les groupes terminaux des blocs qu'un second groupe isocyanate de celui-ci, moyennant quoi le premier groupe isocyanate plus réactif est capable de réagir avec ces derniers et de protéger par greffage les extrémités des groupes terminaux des blocs, laissant le second groupe isocyanate moins réactif libre et non-réagi ; et
le composé de liaison a deux groupes réactifs envers les isocyanates qui sont suffisamment non-contraints stériquement pour être réactifs avec les groupes libres et non-réagis des blocs dont les extrémités sont protégées par greffage.

3. Elastomère thermoplastique énergétique selon la revendication 2, dans lequel le diisocyanate comprend du 2,4-toluène-diisocyanate.

4. Elastomère thermoplastique énergétique selon la revendication 1, dans lequel les blocs de polyéther A sont cristallins à des températures inférieures à 75°C.

5. Elastomère thermoplastique énergétique selon la revendication 1, dans lequel les blocs de polyéther A comprennent des homopolymères, des copolymères, ou des terpolymères dérivés d'un ou plusieurs monomères d'oxétane symétriquement substitués comprenant au moins un membre choisi parmi les éléments du groupe comprenant le 3,3-di (méthylnitraminométhyl)oxétane et le 3,3-di(azidométhyl)oxétane.

6. Elastomère thermoplastique énergétique selon la revendication 1, dans lequel les blocs de polyéther B comprennent un polymère bifonctionnel d'azide et de glycidyle.

7. Elastomère thermoplastique énergétique selon la revendication 1, dans lequel les blocs de polyéther B comprennent du poly(nitrate de glycidyle).

8. Elastomère thermoplastique énergétique selon la revendication 1, dans lequel l'élastomère thermoplastique a un poids moléculaire moyen pondéral d'au moins 40000 et une masse moléculaire moyenne en nombre d'au moins 10000.

9. Elastomère thermoplastique énergétique selon la revendication 1, dans lequel l'élastomère thermoplastique a un poids moléculaire moyen pondéral d'au moins 60000 et une masse moléculaire moyenne en nombre d'au moins 12000.

10. Elastomère thermoplastique énergétique selon la revendication 1, dans lequel l'élastomère thermoplastique a un poids moléculaire moyen pondéral d'au moins 80000 et une masse moléculaire moyenne en nombre d'au moins 15000.

11. Elastomère thermoplastique énergétique selon la revendication 1, dans lequel un ratio en poids des blocs de polyéther A sur les blocs de polyéther B est compris entre 15:85 et 40:60.

12. Elastomère thermoplastique énergétique selon la revendication 1, dans lequel les groupes terminaux des blocs de polyéther A réactifs envers les isocyanates sont des groupes hydroxyles.

13. Composition comprenant :
de 50 pour cent en poids à 95 pour cent en poids d'au moins un solide choisi dans le groupe comprenant les particules combustibles et les particules oxydantes ; et
au moins un élastomère thermoplastique énergétique selon la revendication 1.

14. Composition selon la revendication 13, dans laquelle :
le diisocyanate contient un premier groupe isocyanate qui est essentiellement plus réactif avec les groupes terminaux des blocs qu'un second groupe isocyanate de celui-ci, moyennant quoi le premier groupe isocyanate plus réactif est capable de réagir avec ces derniers et de protéger par greffage les extrémités des groupes terminaux des blocs, laissant le second groupe isocyanate moins réactif libre et non-réagi ; et
le composé de liaison a deux groupes réactifs envers les isocyanates qui sont suffisamment non-contraints stériquement pour être réactifs avec les seconds groupes isocyanates libres et non-réagis des blocs dont les extrémités sont protégées par greffage.

15. Composition selon la revendication 13, dans laquelle les blocs de polyéther A sont cristallins à des températures inférieures à 75°C.

16. Composition selon la revendication 13, dans laquelle les blocs de polyéther A comprennent des homopolymères, des copolymères, ou des terpolymères dérivés d'un ou plusieurs monomères d'oxétane symétriquement substitués comprenant au moins un membre choisi parmi les éléments du groupe comprenant le 3,3-di(méthylnitraminométhyl)oxétane et le 3,3-di(azidométhyl)oxétane.

17. Composition selon la revendication 13, dans laquelle les blocs de polyéther B comprennent un polymère bifonctionnel d'azide et de glycidyle.

18. Composition selon la revendication 13, dans laquelle les blocs de polyéther B comprennent du poly(nitrate de glycidyle).

19. Composition selon la revendication 13, dans laquelle le solide comprend au moins un membre choisi parmi les éléments du groupe comprenant l'aluminium, le perchlorate d'ammonium, et le nitrate d'ammonium.

20. Composition selon la revendication 13, comprenant en outre au moins un membre choisi parmi les éléments du groupe comprenant la tétranitramine de cyclotétraméthylène (HMX), la trinitramine de cyclotriméthylène (RDX), le 2,4,6,8,10,12-hexanitro-2,4,6,8,10,12-hexaazatétracyclo[5,5,0,0^{5,9}.0^{3,11}] (CL20), et le 4,10-dinitro-2,6,8,12-tétraoxa-4,10-diazatétracyclo[5,5,0,0^{5,9}.0^{3,11}]dodécane (TEX).

21. Composition selon la revendication 13, comprenant en outre au moins un plastifiant à haute énergie choisi dans le groupe comprenant la nitroglycérine, le trinitrate de butanetriol (BTTN), les nitramines d'alkyle et de nitratométhyle, le trinitrate de triméthyloléthane (TMETN), le dinitrate de diéthylène glycol, le dinitrate de triéthylène glycol, un polymère d'azide et de glycidyle (GAP), et le di(dinitropropylacétal/-di(dinitropropyl)formal (BDNPA/F) .

22. Composition selon la revendication 13, dans laquelle les groupes terminaux des blocs de polyéther A réactifs envers les isocyanates sont des groupes hydroxyles.

23. Propergol pour moteur de roquette comprenant la composition selon la revendication 13.

24. Propergol pour arme à feu comprenant la composition selon la revendication 13.

25. Explosif comprenant la composition selon la revendication 13.

26. Gazogène comprenant la composition selon la revendication 13.

27. Procédé de préparation d'un élastomère thermoplastique énergétique ayant des blocs de polyéther A qui sont cristallins à des températures inférieures à 60°C et des blocs B qui sont amorphes à des températures supérieures à -20°C, les blocs de polyéther A étant des polyéthers dérivés de monomères comprenant des dérivés de l'oxétane, les blocs de polyéther B étant des polyéthers dérivés de monomères comprenant au moins un membre choisi parmi les éléments du groupe comprenant les oxyranes et leurs dérivés, le procédé comprenant :
la préparation des blocs de polyéther A et des blocs de polyéther D dans des ratios approximativement stoechiométriques destinés à être présents dans l'élastomère thermoplastique énergétique, les blocs de polyéther A étant terminés avec des groupes fonctionnels réactifs envers les isocyanates dérivés de monomères comprenant des dérivés de l'oxétane et cristallins à des températures inférieures à 60°C, les blocs de polyéther B étant terminés avec des groupes hydroxyles secondaires, dérivés de monomères comprenant au moins un membre choisi parmi les éléments du groupe comprenant les oxyranes et leurs dérivés, et amorphes à des températures supérieures à -20°C ;
la protection des blocs de polyéther A et des blocs de polyéther B par greffage de leurs extrémités en faisant réagir les blocs de polyéther A et les blocs de polyéther B avec au moins un diisocyanate dans lequel au moins un premier groupe isocyanate de celui-ci est essentiellement plus réactif avec les groupes terminaux des blocs qu'un second groupe isocyanate de celui-ci, moyennant quoi le premier groupe isocyanate plus réactif est capable de réagir avec les groupes terminaux des blocs, laissant les seconds groupes isocyanates moins réactifs libres et non-réagis ; et
la réaction des blocs de polyéther A et des blocs de polyéther B dont les extrémités sont protégées par greffage conjointement avec un composé de liaison ayant deux groupes réactifs envers les isocyanates qui sont suffisamment non-contraints pour être réactifs avec les seconds groupes isocyanates libres et non-réagis des blocs dont les extrémités sont protégées par greffage.

28. Procédé selon la revendication 27, dans lequel le diisocyanate comprend du 2,4-toluène-diisocyanate.

29. Procédé selon la revendication 27, dans lequel les blocs de polyéther A sont cristallins à des températures inférieures à 75°C.

30. Procédé selon la revendication 27, dans lequel les blocs de polyéther A sont des homopolymères, des copolymères, ou des terpolymères dérivés d'un ou plusieurs monomères d'oxétane symétriquement substitués comprenant au moins un membre choisi parmi les éléments du groupe comprenant le 3,3-di(méthylnitraminométhyl)oxétane et le 3,3-di(azidométhyl)oxétane.

31. Procédé selon la revendication 27, dans lequel les blocs de polyéther B comprennent un polymère bifonctionnel d'azide et de glycidyle.

32. Procédé selon la revendication 27, dans lequel les blocs de polyéther B comprennent du poly(nitrate de glycidyle).

33. Procédé selon la revendication 27, dans lequel l'élastomère thermoplastique à un poids moléculaire moyen pondéral d'au moins 40000 et une masse moléculaire moyenne en nombre d'au moins 10000.

34. Procédé selon la revendication 27, dans lequel l'élastomère thermoplastique a un poids moléculaire moyen pondéral d'au moins 60000 et une masse moléculaire moyenne en nombre d'au moins 12000.

35. Procédé selon la revendication 27, dans lequel l'élastomère thermoplastique a un poids moléculaire moyen pondéral d'au moins 80000 et une masse moléculaire moyenne en nombre d'au moins 15000.

36. Procédé selon la revendication 27, dans lequel un ratio en poids des blocs de polyéther A sur les blocs de polyéther B est compris entre 15:85 et 40:60.

37. Procédé selon la revendication 27, dans lequel les groupes terminaux des blocs de polyéther A réactifs envers les isocyanates sont des groupes hydroxyles.

38. Elastomère thermoplastique énergétique selon la revendication 1, dans lequel les blocs de polyéther A ont un point de fusion compris entre 60°C et 120°C.

39. Elastomère thermoplastique énergétique selon la revendication 1, dans lequel les blocs de polyéther A ont un point de fusion compris entre 75°C et 100°C.

40. Elastomère thermoplastique énergétique ayant des blocs de polyéther A et des blocs de polyéther B et étant présent dans un état solide adéquat pour une utilisation comme un liant pour au moins un composé choisi dans le groupe comprenant un propergol, un explosif, et un gazogène, l'élastomère thermoplastique énergétique étant fabriqué à partir d'une composition comprenant comme constituants :
des blocs de polyéther A terminés avec des groupes réactifs envers les isocyanates dérivés de monomères comprenant au moins un membre choisi parmi les éléments du groupe comprenant le 3,3-di(éthoxyméthyl)oxétane, le 3,3-di(chlorométhyl)oxétane, le 3,3-di(méthoxymethyl)oxétane, le 3,3-di(fluorométhyl)oxétane, le 3,3-di(acétoxyméthyl)oxétane, le 3,3-di(hydroxyméthyl)oxétane, le 3,3-di(méthoxyéthoxyméthyl)oxétane, le 3,3-di(iodométhyl)oxétane, le 3,3-di(nitratométhyl)oxétane, le 3,3-di(méthynitraminométhyl)oxétane, et le 3,3-di(azidométhyl)oxétane;
des blocs de polyéther B terminés avec des groupes hydroxyles secondaires dérivés de monomères comprenant au moins un membre choisi parmi les éléments du groupe comprenant un polymère d'azide et de glycidyle et le poly(nitrate de glycidyle) ; et
des groupes de liaison dérivés d'au moins un diisocyanate et au moins un composé de liaison comprenant deux groupes fonctionnels qui sont réactifs avec les groupes isocyanates du diisocyanate.
